Europäisches Patentamt

European Patent Office

Office européen des brevets

(11) Veröffentlichungsnummer: **0 369 513**
**A2**

## (12) EUROPÄISCHE PATENTANMELDUNG

(21) Anmeldenummer: **89202749.1**

(22) Anmeldetag: **31.08.89**

(51) Int. Cl.⁵: **F16L 11/00, B65H 75/38, F16L 41/03**

(30) Priorität: **01.09.88 DE 8811045 U**
**01.09.88 DE 8811047 U**

(43) Veröffentlichungstag der Anmeldung:
**23.05.90 Patentblatt 90/21**

(84) Benannte Vertragsstaaten:
**ES GR**

(71) Anmelder: **HOUBEN KUNSTSTOFFTECHNIK GMBH**
**Viktoriastrasse 11**
**D-4060 Viersen(DE)**

(72) Erfinder: **Houben, Willi**
**Platanenweg 36**
**D-4057 Brüggen 1(DE)**
Erfinder: **Houben, Norbert**
**Lobbericher Strasse 1**
**D-4060 Viersen 12(DE)**

(74) Vertreter: **Uhlmann, Hans, Dr. rer.nat., Dipl.-Chem.**
**Hofstrasse 83**
**D-4060 Viersen 1(DE)**

(54) **Druckschlauch mit dafür angepasster Schlauchtrommel und angepasstem Kupplungsstück.**

(57) Der Druckschlauch für Garten, Werkstatt und Garage ist als Flachschlauch ausgebildet, bei dem das Verhältnis der Höhe zur Breite mindestens 1 : 2 beträgt, und der mindestens einen die Flachseiten verbindenden und abstützenden Steg auweist. Die dazugehörige Schlauchtrommel und das dazugehörende Kupplungsstück sind dem Querschnitt des Flachschlauches angepaßt.

Fig.1

EP 0 369 513 A2

## Druckschlauch mit dafür angepaßter Schlauchtrommel und angepaßtem Kupplungsstück

Die Erfindung betrifft einen Druckschlauch für Garten, Werkstatt uns Garage mit dafür angepaßter Schlauchtrommel und angepaßtem Kupplungsstück.

Solche Druckschläuche, mit denen Wasser unter Druck einer Armatur, beispielsweise einer Spritze u.ä. zugeführt wird, haben nachfolgenden Aufbau: Sie bestehen aus einer Seele bzw. Innenlage aus Kunststoff, insbesondere aus Weich-PVC und einem Außenmantel aus einem abriebfesten Kunststoff, vorzugsweise ebenfalls wieder aus Weich - PVC und haben meistens als Verstärkung zwischen den beiden Kunststofflagen noch eine Zwischenlage aus Fäden, Gewebe oder Gewirke, insbesondere aus Polyester. Da dieser faser- bzw. gewebeverstärkten dreilagigen Druckschläuche den weitaus größten Anteil ausmachen, wird die Erfindung nachfolgend am Beispiel eines dreilagigen Druckschlauches beschrieben.

Diese Druckschläuche sind in großem Umfang insbesondere als Gartenschläuche und für die Autowäsche im Einsatz und haben die früher üblichen Schläuche aus Gummi weitgehend verdrängt, da sie stabiler, haltbarer und mit höherem Wasserdruck beaufschlagbar sind. Sehr häufig werden sie mit daran angepaßten Armaturen wie Kupplungsstücken und einer dafür angepaßten Schlauchtrommel angeboten und eingesetzt. Der Druckschlauch kann, wenn nicht die volle Schlauchlänge benötigt wird, teilweise auf der Schlauchtrommel aufgerollt bleiben.

Bei Nichtgebrauch dient die Schlauchtrommel der Aufbewahrung der gesamten Schlauchlänge im aufgerollten Zustand. Die Schlauchtrommel weist ihrerseits wieder Kupplungsstücke auf, die einerseits dem Anschluß des Druckschlauches dienen, andererseits über ein kurzes Schlauchstück die Verbindung zum Wasseranschluß herstellen. Am anderen Ende des Druckschlauches dienen Kupplungsstücke dem Anschluß von Geräten wie Spritzen oder Brausen. Ein erheblicher Nachteil ist, daß der vorbekannte Druckschlauch durch seine Steifigkeit und den runden Querschnitt in aufgerolltem Zustand viel Platz erfordert, sodaß für die Aufrollung und den Transport platzaufwendige Schlauchwagen erforderlich sind. Ein noch größerer Nachteil besteht darin, daß man Knickstellen und Knoten vermeiden muß, weil sich in diesem Fall die Schlauchwände flachdrücken, berühren und den Durchfluß des Wassers sperren.

Zur Vermeidung des hohen Platzbedarfes ist bereits ein Flachschlauch mit ovalem Querschnitt entwickelt worden, der sich flach aufwickeln läßt, abgewickelt und im Gebrauch unter dem Wasserdruck aber einen mehr oder weniger runden Querschnitt annimmt und damit den Durchfluß des Wassers ermöglicht. Eine befriedigende Lösung stellt aber auch dieser Druckschlauch nicht dar, da bei ihm die Gefahr des Abknickens und damit des Verschlusses sogar noch vergrößert ist. Besonders nachteilig ist dabei, daß sich der Schlauch im aufgerollten bzw. teilweise abgerollten Zustand überhaupt nicht verwenden läßt, da er sich auf der Rolle flachlegt und so kein oder nur ganz geringfügig Wasser durchläßt.

Der Erfindung liegt deshalb die Aufgabe zugrunde, einen Druckschlauch und dafür angepaßte Kupplungsstücke und eine angepaßte Schlauchtrommel zu schaffen, die die oben aufgezeigten Nachteile nicht aufweisen, platzsparend untergebracht werden können und wobei der Druckschlauch bei gleicher oder möglichst sogar erhöhter Druckbelastbarkeit auch im ganz oder teilweise aufgerollten Zustand und bei Herumführung um Ecken und Kanten und bei Verknotungen das Wasser noch ungehindert hindurchtreten läßt.

Diese Aufgabe wird bei einem Druckschlauch gemäß dem Gattungsbegriff des Anspruchs 1 dadurch gelöst, daß der Druckschlauch als Flachschlauch ausgebildet ist, bei dem das Verhältnis der Höhe zur Breite mindestens 1 : 2 beträgt, vorzugsweise 1 : 2,5, und daß der Flachschlauch mindestens einen, die Flachseiten verbindenden und gegeneinander abstützenden Steg aufweist.

Die Erfindung läßt sich an sich schon bei einem Druckschlauch mit ovalem Querschnitt verwirklichen, bei dem ein mittig angeordneter Steg verhindert, daß beim Aufwickeln oder auch beim Gebrauch der Druckschlauch zusammengedrückt wird, die Flachseiten gegeneinander zur Anlage kommen und dadurch der Durchfluß ver- bzw. behindert wird. In einer bevorzugten Ausführungsform hat der Druckschlauch jedoch einen rechteckigen Querschnitt, und es ist besonders zweckmäßig, wenn die Flachseiten durch zwei Stege verbunden und abgestützt sind, die den Querschnitt des Druckschlauches in drei Kammern annähernd gleichen Querschnitts für die Einzelkammern aufteilen. Die Erfindung wird deshalb nachfolgend an diesem bevorzugten Ausführungsbeispiel näher erläutert, jedoch ohne Beschränkung auf dieses spezielle Beispiel. So kann selbstverständlich die Abstützung der Flachseiten des Druckschlauches auch über mehr als zwei Stege erfolgen. In der Dickenbemessung der Stege sind ebenfalls Variationen möglich, die als solche auch von der Anzahl der Stege abhängen. Wichtig ist lediglich, daß die Anzahl und Bemessung so erfolgt, daß ein Zusammendrücken bzw. Abknicken mit Sicherheit vermieden wird.

Die Vorteile des neuen Druckschlauches sind offensichtlich und bestehen zusammengefaßt darin, daß der Platzbedarf des Gegenstandes nach der Neuerung um ca. 70 % geringer ist als bei dem bisher üblichen Rundschlauch, bei dem bedingt durch die Kreisform erhebliche Leerräume unvermeidbar sind und so der Schlauch selbst und die Geräte zur Aufbewahrung viel Platz erfordern. Der Druckschlauch mit dem bevorzugten rechteckförmigen Querschnitt läßt sich ohne jeden Platzverlust flach aufwickeln, so daß gegenüber den bisherigen, viel Platz erfordernden sperrigen Schlauchwagen für die gleiche Meterzahl an Schlauch weniger Platz erforderlich ist und sich die weiter unten beschriebenen gänzlich neuen Möglichkeiten für die Ausgestaltung der Schlauchtrommel ergeben.

Der Gebrauchswert der Erfindung wird vor allem dadurch noch erhöht, daß trotz dieser Aufrollung in Flachform und des geringen Platzbedarfes jederzeit der volle Wasserdurchfluß gewährleistet ist, gleichgültig, ob der Schlauch vollständig oder zu Teilen auf der Schlauchtrommel aufgewickelt oder ob er um scharfe Kanten herumgeführt oder gar verknotet ist. Die Stege gemäß der Neuerung, insbesondere bei der bevorzugten Ausführungsform mit zwei Stegen, verhindern stets sicher eine Querschnittsverengung bzw. einen Verschluß. Durch die neue Raumform hat sich darüberhinaus der Betriebsdruck des Schlauches bis auf 15 bar, der Platzdruck bis auf 45 bar steigern lassen.

Für Beregnungsysteme ist bereits ein Schlauch mit Dreikammersystem bekannt, der aber nicht als Druckschlauch einsetzbar ist und auch keine Anregung zur Lösung des technischen Problems geben konnte, das der Erfindung zugrunde liegt. Ein solcher Beregnungsschlauch hat nicht den mehrlagigen Aufbau eines Druckschlauches und ist nicht auf Druck beanspruchbar. Er besteht lediglich aus einer einfachen Wandung, in die Löcher eingebracht sind, aus denen die Sprühstrahlen austreten. Das dortige Drei-Kammer-System und die Ausbildung als Flachschlauch sind darin begründet, daß in die beiden seitlichen Kammern die Öffnungen zur Besprühung nach der Seite hin untergebracht sind, die in der mittleren Kammer zur Besprühung in Schlauchnähe. Die flache Ausbildung im Bodenbereich dient der sicheren Auflage des Beregnungsschlauches auf dem Boden. Ein solcher Beregnungsschlauch ist üblicherweise an einen Druckschlauch über ein Kupplungsstück angekuppelt und bleibt flach ausgerollt im zu berieselnden Gebiet liegen. Er kann seiner gänzlich anderen Funktion und Ausgestaltung wegen nicht als Druckschlauch dienen und ebenfalls nicht wie ein Druckschlauch ganz oder teilweise aufgerollt mit Wasser beaufschlagt werden.

Die Herstellung des Druckschlauches nach der Erfindung erfolgt in ähnlicher Weise wie die der bisherigen Rundschläuche in der Weise, daß zunächst die Seele des Schlauches aus vorzugsweise Weich-PVC extrudiert, dann mit einer Umwickelvorrichtung die Umhüllung aus Polyesterfäden aufgebracht und anschließend der abriebfeste Außenmantel aufgebracht wird. Die dafür erforderlichen Werkzeuge müssen dabei jedoch der neuen Raumform in zweckmäßiger Weise angepaßt werden, um die Stege mit extrudieren zu können und die Umhüllung mit Polyesterfäden der Rechteckform des Schlauchquerschnitts anzupassen. Soweit hier Materialangaben gemacht sind, sind diese Werkstoffe bevorzugt geeignet, aber natürlich gegen andere oder noch bekannt werdende bessere Werkstoffe austauschbar.

Die neue Querschnittsform des Druckschlauches macht eine gänzlich neue Schlauchtrommel möglich, die gegenüber den bisherigen Schlauchtrommeln, insbesondere in der Form von Schlauchwagen, erhebliche Vorteile aufweist. Diese Schlauchwagen, die meist mit Rädern versehen sind, weisen beidseitig Begrenzungsscheiben auf, die entweder vollflächig oder durchbrochen sind und durch Speichen von der Peripherie zur Rundtrommel hin die Begrenzung ergeben. Auf dieser Rundtrommel ist der Druckschlauch in mehreren Lagen nebeneinander und übereinander aufgewickelt. In verschiedenartigsten Ausführungsformen wird über Schraubverbindungen bzw. Kupplungsstücke für die Wasserzufuhr vom Wasseranschluß und für die Wasserableitung zum Druckschlauch gesorgt.

Der Nachteil dieser Schlauchwagen ist, daß sie sehr sperrig sind und viel Platz erfordern. Außerdem ist die Führung des aufzubewahrenden und auf- und abwickelnden Schlauches nicht exakt, da, um die erforderliche Menge an Schlauch aufnehmen zu können, mehrere Schlauchwindungen in einer Ebene nebeneinander aufgewickelt werden müssen. Dabei kommt es beim Aufwickeln des Schlauches häufig dazu, daß einzelne Schlauchwindungen schräg verlaufen und damit für eine bestimmte Menge an Schlauch noch mehr Platz erforderlich ist. Da die Trommel zusammen mit den damit fest verbundenen Begrenzungsflächen auf der Achse frei beweglich und ungebremst ist, rollt sich außerdem der Schlauch beim Abwickeln häufig unkontrolliert ab.

Die Erfindung gibt die Möglichkeit, diese Nachteile zu vermeiden und eine Schlauchtrommel zu schaffen, die weniger Platz erfordert und den Schlauch kontrolliert und geführt auf- und abzuwickeln erlaubt.

Die dem erfindungsgemäßen Druckschlauch angepaßte Schlauchtrommel ist dadurch gekennzeichnet, daß der Abstand der beidseitigen Begrenzungsscheiben der Breite des Flachschlauches entspricht. Bevorzugt ist dabei eine der Begrenzungsscheiben als feststehende Rückscheibe ausgebildet und die Rundtrommel und damit fest verbundene vordere Begrenzungsscheibe - im weiteren als Frontscheibe bezeichnet - gegenüber der Rückscheibe drehbar gelagert.

Der Vorteil der Schlauchtrommel nach der Erfindung liegt darin, daß - bedingt durch die Flachform des Druckschlauches und die dadurch möglich werdende Verengung des Abstandes der Begrenzungsscheiben lediglich auf eine Schlauchbreite der Vorgang des Auf-und Abwickelns in kontrollierter Weise erfolgt. Mit der Bewegung der drehbaren Frontscheibe, die zweckmäßig über eine daran angebrachte Handkurbel erfolgt, wird der über ein Verbindungsstück mit der Rundtrommel verbundene Schlauch zwangsgeführt. Durch die Flachform, insbesondere bei der bevorzugten Ausführung des Flachschlauches in Rechteckform kommen die einzelnen Windungen des Druckschlauches ohne jeden Zwischenraum zur satten Auflage aufeinander, und es fällt all der Leerraum weg, der bei Rundschläuchen unvermeidlich ist.

Die feststehende Rückscheibe kann in bisher üblicher Weise an einem Gestell befestigt sein, wie es von Schlauchwagen her bekannt ist. Die Ausbildung der einen Begrenzungsscheibe als feststehende Rückscheibe und die Ausführungsform der Schlauchtrommel lediglich in der Breite des Flachschlauches ergibt jedoch viel vorteilhaftere Möglichkeiten. So ist zweckmäßig die feststehende Rückscheibe mit Befestigungsöffnungen versehen, durch die Befestigungsschrauben zur Befestigung der Schlauchtrommel an einer Wand hindurchgeführt werden können. Es ergibt sich damit eine elegante Lösung, die Schlauchtrommel gemäß der Neuerung an der Wand eines Schuppens, einer Garage oder einer Werkstatt platzsparend unterzubringen.

Die Schlauchtrommel nimmt so nur wenig Platz in Anspruch und kann an einer meist ohnedies freien, ungenutzten Wand angebracht werden. Da sie in der Breite im wesentlichn etwa der Breite des Flachschlauches entspricht, ergibt sich eine sehr ansprechende und ästhetische Form.

Die Drehbarkeit der Rundtrommel und damit fest verbundenen Frontscheibe kann auf verschiedenartige Weise realisiert werden. Bei einer zweckmäßigen Ausführungsform greift die Rundtrommel mit einem zylinderförmigen Ansatz in eine entsprechende Aussparung der Rückscheibe ein, und es wird dadurch die Drehbarkeit von Frontscheibe und damit verbundener Rundtrommel bewirkt.

Eine weitere vorteilhafte Ausgestaltung besteht darin, daß die Rückscheibe einen zylinderförmigen Hohlzapfen aufweist, der in eine entsprechende zylinderförmige Ausbohrung der Rundtrommel eingreift, sodaß der zylinderförmige Zapfen in der zylinderförmigen Ausbohrung läuft. Diese Ausführungsform hat den Vorteil einer sehr stabilen und sicheren Führung der den Schlauch tragenden Rundtrommel.

Die Wasserzufuhr erfolgt zweckmäßig über einen Wasseranschluß und eine Wasserzuleitung innerhalb der Rundtrommel in deren Achsrichtung. Auch hierbei sind verschiedenartige Ausgestaltungen möglich. Bei einer zweckmäßigen Ausführungsform ist die Rundtrommel ein in sich geschlossener, massiver zylindrischer Körper, der lediglich die in Achsrichtung verlaufende Zuflußbohrung als Wasserzuleitung aufweist, die mittig in die rechtwinklig dazu angeordnete Wasserabflußbohrung übergeht, die ihrerseits zum Schlauch führt. Im Bereich der Wasserabflußbohrung ist die Rundtrommel abgeflacht, sodaß sich ein Freiraum ergibt. Dieser kann auch andersartig gestaltet sein. Er dient dem Zweck, das Anschlußstück für den Druckschlauch aufzunehmen.

Eine besonders bevorzugte Ausführungsform für die Wasserzufuhr und Weiterleitung an den Druckschlauch gemäß der Erfindung besteht darin, daß die Anschlußnippel sowohl für die Wasserzu- als auch für die Weiterleitung an den Druckschlauch integraler Bestandteil einer in die Frontscheibe eingesetzten Abdeckplatte ungefähr vom Durchmesser der Rundtrommel sind. Diese in der Zeichnungsbeschreibung näher beschriebene Ausführungsform hat den Vorteil, daß sich durch die Integrierung in die Abdeckplatte keine Dichtungsprobleme ergeben und die Wege zwischen Wasserzufuhr und Wasserableitung äußerst kurz sind. Ein wesentlicher Bestandteil dieser Ausführungsform, bei der das von dem Waserhahn kommende Schlauchstück durch den zylindrischen Hohlzapfen der Frontscheibe von hinten her dem Wasserzufuhrnippel zugeführt wird, ist ein Rotantionsverbindungsstück, das drehbar auf dem Wasserzufuhrnippel gelagert ist.

In ähnlicher Weise, wie die Ausbildung des Druckschlauches eine Anpassung der Schlauchtrommel erforderlich macht, ist das auch für das Kupplungsstück erforderlich, das den Übergang vom Druckschlauch zu üblichen Wasserverteilungsgeräten wie Spritzen und Brausen ermöglicht. Diese Geräte haben üblicherweise an ihrem Verbindungsteil zu konventionellen runden Druckschläuchen hin eine runde Steckverbindung bzw. ein rundes Außengewinde und der Benutzer ist verständlicherweise daran interessiert, die meist vorhandenen Geräte wie Spritzen, Brausen u.ä. weiterbenutzen zu können. Um diesen Übergang von der Rechteckform des Druckschlauches auf die Rundform des Gerätes zu ermöglichen, besteht das Kupplungsstück im Sinne der Erfindung aus einer Schlauchtülle, die eine der Anzahl der Kammern entsprechende Anzahl von Hohlsteckern aufweist, die annähernd einen Außenumfang haben wie der Querschnitt der Kammern, einer über den Druckschlauch aufschiebbaren Schlauchmuffe und einen Geräteverbindungsteil. Die Funktion und Handhabung dieser aufeinander abgestimmten Teile des Kupplungsstückes ist wie folgt. Die Schlauchmuffe, die sich in ihrem Querschnitt vorzugsweise zum Geräteverbindungsteil hin leicht verjüngt, wird auf das Ende des Druckschlauches mit seinem rechteckigen Querschnitt aufgeschoben. Die Hohlstecker der Schlauchtülle werden in die Kammern des Druckschlauches eingeführt.

Da sie sich zweckmäßig konisch zum offenen Ende hin verjüngen, lassen sie sich leicht in die Kammern einführen, weiten mit tieferen Eindringen den Druckschlauch zum Ende hin etwas auf, sodaß sich eine sichere Abdichtung ergibt. Diese wird noch dadurch verbessert, daß in einer bevorzugten Ausführungsform auch die Schlauchmuffe leicht verjüngt ist, und zwar zum Geräteverbindungsteil hin, und so zusätzlich abdichtet.

Das Geräteverbindungsteil besteht bevorzugt aus einem rechteckigen Zwischenklotz und einem Rundteil mit Innengewinde bzw. einer Steckverbindung, wobei zur Erleichterung der Anbringung und Handhabung der zu verbindenden Geräte das Rundteil gegenüber dem Zwischenklotz drehbar gelagert ist. Um dem vom Mehrkanal-Druckschlauch her dem Gerät zugeführten Wasser einen möglichst geringen Widerstand beim Übergang von der Rechteckform auf die Rundöffnung entgegenzusetzen, wird die ohnehin erforderliche Abdichtung zwischen der Schlauchtülle und dem Zwischenklotz dafür genutzt, eine Verteilungskammer zu schaffen, die die Vereinigung der drei aus den Hohlsteckern austretenden Wasserströme und einen reibungslosen Übergang zum Rundteil hin erleichtert.

Weitere Vorteile und Einzelheiten der Erfindung ergeben sich aus den Zeichnungen und der nachfolgenden Zeichnungsbeschreibung, die bevorzugte Ausführungsformen der Erfindung wiedergeben, ohne diese jedoch auf diese Ausführungsbeispiele zu beschränken.

Fig. 1 Zeigt den Druckschlauch im Querschnitt,

Fig. 2 einen Schnitt durch eine Ausführungsform der Schlauchtrommel mit kompakter Rundtrommel in ihrer Gesamtheit,

Fig. 3 isoliert die Rückscheibe,

Fig. 4 die Draufsicht auf die Rundtrommel mit Teilschnitt im Bereich der Wasserzu- und Wasserabfuhr,

Fig. 5 den Schnitt entlang der Linie A - B durch die Rundtrommel,

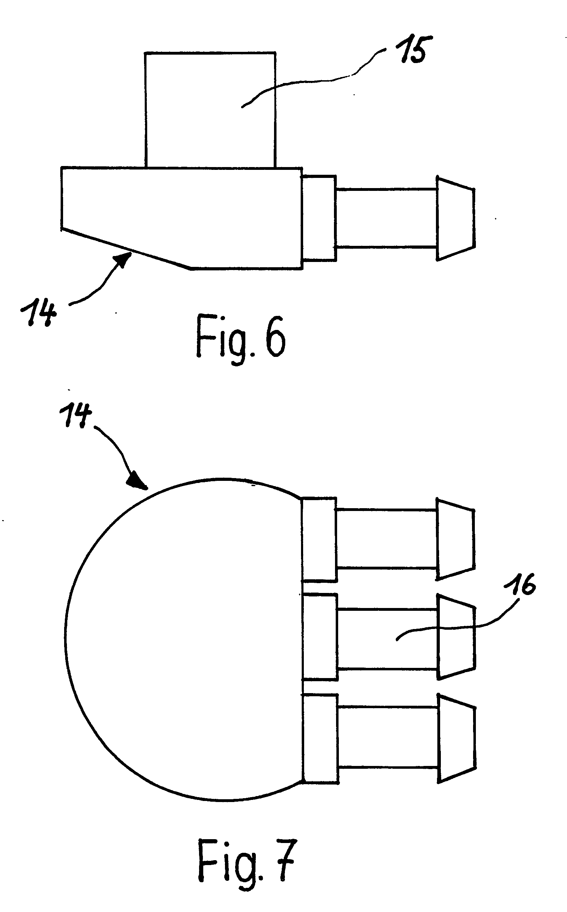

Fig. 6 einen Schnitt durch das Verbindungsstück,

Fig. 7 die Draufsicht auf das Verbindungsstück,

Fig. 8 eine andere Ausführungsform der Schlauchtrommel mit in die Rundtrommel eingreifenden zylinderförmigen Hohlzapfen und in eine Abdeckplatte integrierter Wasserzu-und Wasserableitung,

Fig. 9 einen Schnitt durch die Schmalseite eines Kupplungsstücks und

Fig. 10 einen Schnitt durch die Breitseite eines Kupplungsstückes.

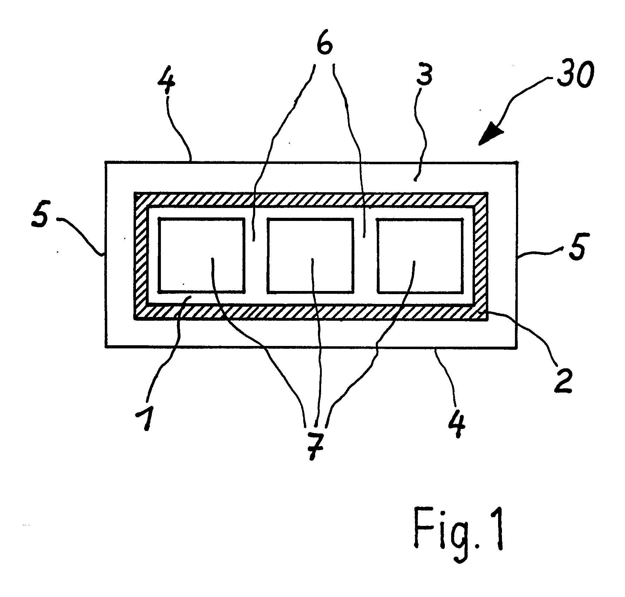

Der in Fig. 1 im Querschnitt dargestellte Druckschlauch 30 hat eine Seele 1 aus Weich - PVC mit einer Wandstärke von ca. 1 mm und ist durch Stege 6 von 1 bis 2 mm Dicke in drei ungefähr gleich große Kammern 7 von rechteckigem Querschnitt unterteilt. Verstärkt ist der Druckschlauch 30 durch die Ummantelung 2 aus um die Seele 1 herumgeführten Polyesterfäden. Seele 1 und Ummantelung 2 sind von außen her umhüllt von dem Außenmantel 3 von ca. 2 mm Dicke, ebenfalls aus Weich-PVC, das besonders abriebfest eingestellt ist. Das Material des Außenmantels3ist zweckmäßig eingefärbt. Es durchdringt die Ummantelung 2,und dadurch erfolgt eine sehr gute Verankerung des Außenmantels 3 mit dem Material der Seele 1, und es ergibt sich ein enger Verbund aller drei den Druckschlauch 30 aufbauenden Lagen.

Die Außenabmessungen des als Flachschlauch mit rechteckigem Querschnitt ausgebildeten Druckschlauches 30 betragen für die Flachseiten 4, d.h. die Breite des Druckschlauches 30 ca. 23 mm, für die Schmalseiten 5, d.h. die Höhe ca. 9 mm. Wenn größere Durchflußmengen erwünscht sind, kann der Querschnitt vergrößert und die Flachseite bis zu 30 mm betragen. In diesem Fall ist es zweckmäßig, die Stege 6 etwas stärker zu gestalten und die Dicke bis auf ca. 2 mm zu vergrößern.

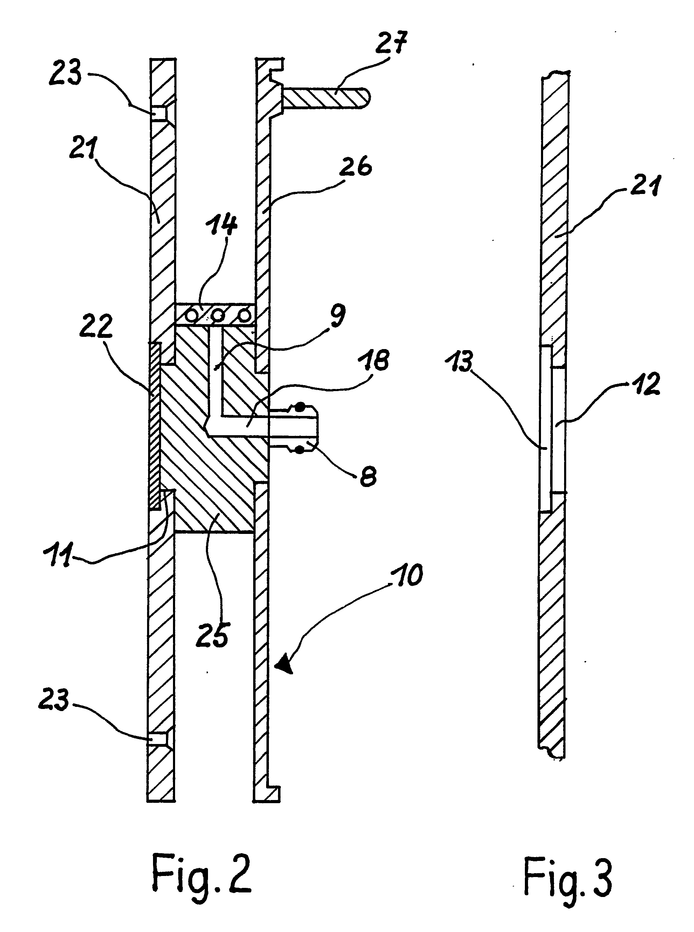

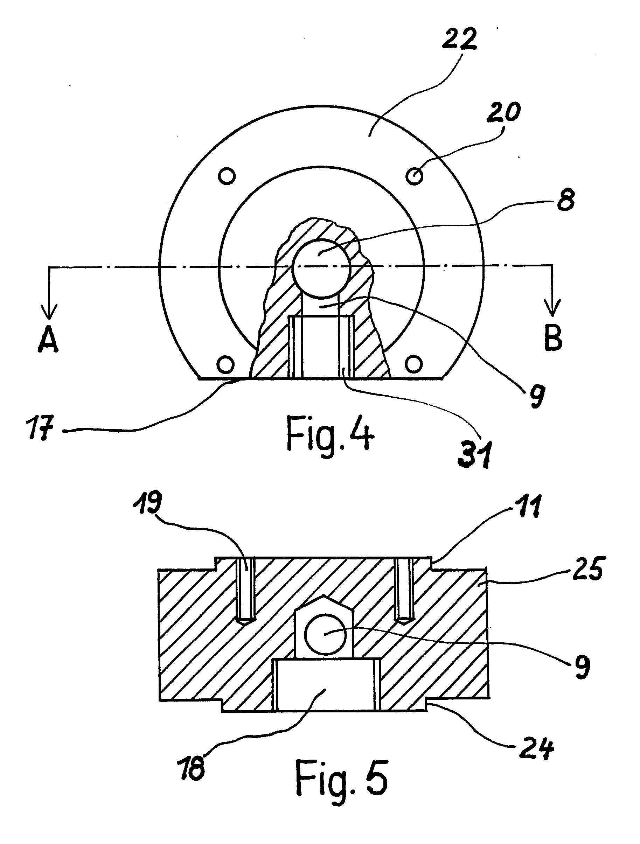

Die in Fig. 2 dargestellte Schlauchtrommel 10 besteht aus der Rundtrommel 25, die ein kompaktes zylinderförmiges Kunststoff-Spritzteil ist, an das auf der Seite der Frontscheibe 26 der Wasseranschlußnippel 8 angeformt ist. Der Wasseranschlußnippel 8 dient zum Aufstecken eines nicht dargestellten Wasserzuleitungsstückes, ist innen hohl und führt in die Wasserzuleitung 18 in der Rundtrommel 25. Die Wasserzuleitung 18 hat einen kreisförmigen Querschnitt und erstreckt sich ungefähr bis in die Mitte der Rundtrommel 25. Im rechten Winkel zur Wasserzuleitung 18 verläuft aus der Mitte der Rundtrommel 25 heraus der Wasserabfluß 9 zur Peripherie der Rundtrommel 25, die in diesem Bereich, wie aus Fig. 4 ersichtlich, eine Abflachung 17 aufweist und dadurch Raum für das Verbindungsstück 14 schafft, das mit dem Rundanschluß 15 in die Buchse 31 eingesteckt werden kann, in der der Wasserabfluß 9 endet. Das andere, rechtwinklig zum Rundanschluß 15 angeordnete Ende des Verbindungsstückes 14 ist als Dreier-Steckanschluß 16 ausgebildet, auf das der rechteckige Druckschlauch 30 mit seinen drei Kammern 7 aufgesteckt werden kann. Durch die Abflachung 17 der Rundtrommel 25 wird erreicht, daß sich zusammen mit dem Verbindungsstück 14 insgesamt wieder eine nahezu zylindrische Form der Rundtrommel 25 ergibt.

Die Höhe des Zylinders der Rundtrommel 25 entspricht ungefähr der Breite des Flachschlauches 30, sodaß die einzelnen übereinanderliegenden Schlauchwindungen exakt von der feststehenden Rückscheibe 21 und der drehbaren Frontscheibe 26 geführt sind und der Rechteckform des Flachschlauches 30 wegen dicht aufeinanderliegen.

Die Rückscheibe 21 ist durch in die Schraublöcher 19 eingreifende Schrauben 20 über die Befestigungsplatte 22 fest mit der Rundtrommel 25 und damit auch mit der Frontscheibe 26 verbunden. Die Rückscheibe 21 weist zu diesem Zweck vorderseitig eine Rundtrommel-Aussparung 12 auf, in die der Ansatz 11 an der Rundtrommel 25 eingreift, und rückseitig eine Befestigungsplatten-Aussparung 13, in die die Befestigungsplatte 22 eingefügt und mit den Schrauben 20 mit den in die Rundtrommel 25 eingebrachten Schraublöchern 19 verschraubt und damit fest mit der Rundtrommel 25 verbunden ist.

Die Frontscheibe 26 kann mit der Rundtrommel 25 als ein einheitliches Kunststoffteil im Spritzguß geformt oder, wie in der Fig. 1 dargestellt, mit der Rundtrommel 25 über eine an diese angeformte Nabe 24 fest verbunden sein. An die Frontscheibe 26 ist die Handkurbel 27 angeformt.

Die Rückscheibe 21 weist zwei Befestigungsöffnungen 23 zur einfachen Befestigung der Schlauchtrommel 10 an einer Wand auf.

Als Material für die Schlauchtrommel 10 eignet sich besonders gut ein schlagfester und alterungsbeständiger Kunststoff. Selbstverständlich kann die Schlauchtrommel 10 jedoch auch in Metall ausgeführt werden.

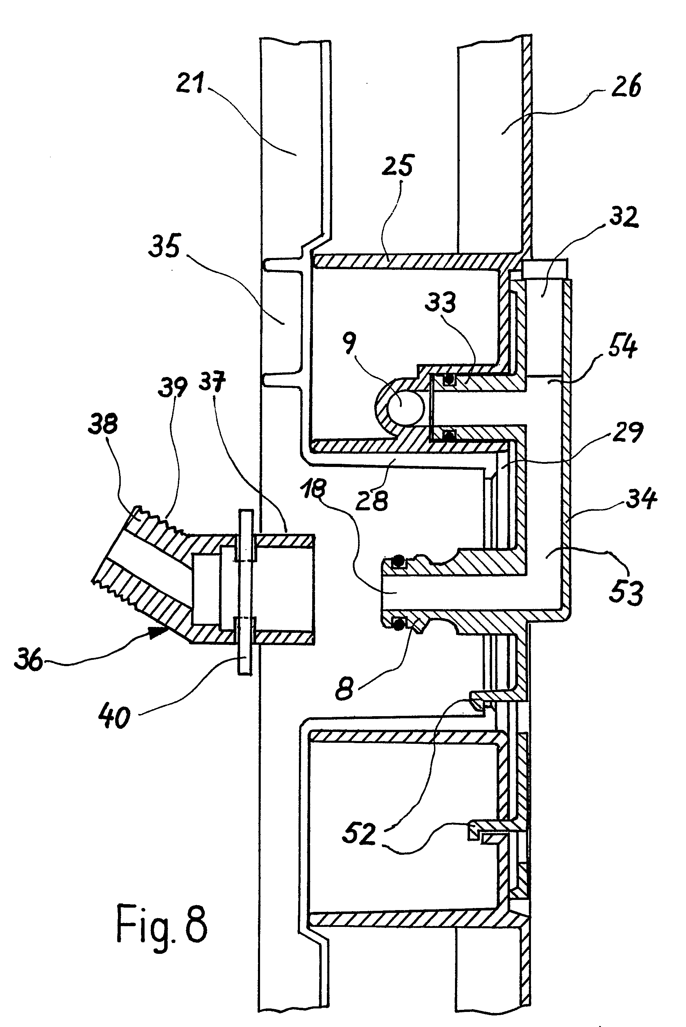

Figur 8 zeigt eine Schlauchtrommel, bei der die Rundtrommel 25 als hohler Spritzgußteil ausgeführt ist und eine Ausbohrung 29 aufweist, in die der zylindrische Hohlzapfen 28, der integraler Bestandteil der Rückscheibe 21 ist, eingreift. Durch den gleitenden Eingriff des Hohlzapfens 28 in die ebenfalls zylindrische Ausbohrung 29 ergibt sich eine sehr stabile Führung der Frontscheibe 26 und der Rundtrommel 25 gegenüber der feststehenden Rückscheibe 21. Die Wasserzuleitung 18 erfolgt hier über die in der festen Rückscheibe 21 vorhandene Aussparung 35, in der der nicht dargestellte Wasserzuleitungsschlauch untergebracht ist, zum Rotationsverbindungsstück 36, das in der Fig. 8 der besseren Erkennbarkeit wegen explosionsartig abgesetzt vom Schlauchnippel 8 dargestellt ist. In zusammengebauten Zustand übergreift das Rotationsverbindungsstück 36 mit seinem innen kugelförmig ausgearbeiteten Rotationsteil 37 den Wasseranschlußnippel 8, ist auf diesem drehbar gelagert und ist mit einer Klammer 40 auf dem Wasseranschlußnippel 8 festgelegt. Die Verbindung zum Wasserzuleitungsschlauch erfolgt über das Gewindeteil 38 mit Gewinde 39 des Rotationsverbindungsstückes 36. Der Wasseranschlußnippel 8 ist integraler Bestandteil der Abdeckplatte 34, die über Schnappverbindungen 52 auf der Frontscheibe 26 festgelegt ist und über den Kanal 53 auf kürzestem Weg und ohne erforderliche Abdichtungen die Verbindung zum Wasserabflußnippel 33 herstellt, der im Eingriff steht mit dem Wasserabfluß 9 und der Rundtrommel 25. Von diesem aus erfolgt über ein in Fig. 8 nicht dargestelltes, aber im Aufbau und Funktion dem weiter hinten beschriebenen Kupplungsstück 41 entsprechendes Kupplungsstück die Weiterleitung des Wassers zum ebenfalls in dieser Figur nicht dargestellten Druckschlauch 30. Der Verschlußzapfen 32 verschließt die Extrusionsbohrung 54, die erforderlich ist, um bei der Herstellung der Abdeckplatte 34 das Extrusionswerkzeug einführen zu können.

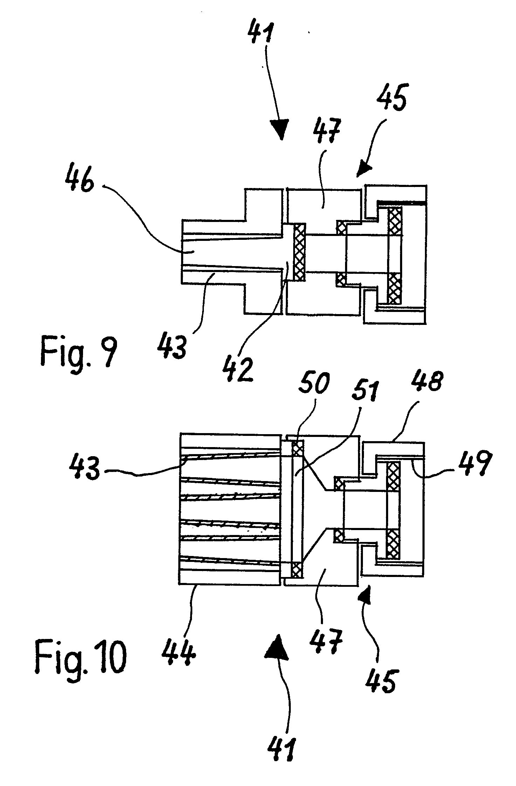

Die Figuren 9 und 10 zeigen das Kupplungsstück 41, mit dem ein nicht dargestelltes Gerät, wie z.B. eine Spritze mit rundem Querschnitt, mit dem Mehrkanal-Druckschlauch 30 verbunden wird.

Das Kupplungsstück 41 ist dreiteilig und besteht aus der Schlauchtülle 42, die drei sich zum offenen Ende 46 hin verjüngende Hohlstecker 43 aufweist, der Schlauchmuffe 44, die auf den Druckschlauch 30 aufgeschoben ist, und dem Geräteverbindungsstück 45. Gegenüber der Schlauchtülle 42 ist der rechteckige Zwischenklotz 47 des Geräteverbindungsteils 45 mit dem Dichtungsring 50 abgedichtet, der so stark gehalten ist, daß sich zwischen Schlauchtülle 42 und dem Geräteverbindungsteil 45 eine Mischkammer 51 ergibt, die den aus den Hohlsteckern 43 zuströmenden Wasserleitungsströmen den reibungsarmen und gleichmäßigen Übergang in das Rundteil 48 des Geräteverbindungsteiles 45 erleichtert. Das Rundteil 48 weist in der dargestellten Ausführung ein Innengewinde 49 zum Einschrauben eines Gerätes, beispielsweise einer Spritze auf, kann aber in entsprechender Weise auch üblichen Stecksystemen angepaßt werden. Das Rundteil 48 ist gegenüber dem rechteckigen Zwischenklotz 47 drehbar gelagert und erleichtert so Handhabung und Anbringung eines nicht dargestellten Gerätes. Schlauchmuffe 44 und Geräteverbindungsteil 45 sind in den Ecken miteinander ververschraubt, was jedoch in der Zeichnung nicht dargestellt ist.

**Ansprüche**

1. Druckschlauch für Garten, Werkstatt und Garage, bestehend aus einer Seele (1) aus Kunststoff, insbesondere auch Weich-PVC, gegebenenfalls einer Ummantelung (2) aus Fäden, Gewebe oder Gewirke, insbesondere aus Polyester, und einem abriebfesten Außenmantel (3) aus Kunststoff, dadurch gekennzeichnet, daß der Druckschlauch als Flachschlauch ausgebildet ist, bei dem das Verhältnis der Höhe zur Breite mindestens 1 : 2 beträgt, und der mindestens einen, die Flachseiten (4) verbindenden und abstützenden Steg (6) aufweist.

2. Druckschlauch nach Anspruch 1, dadurch gekennzeichnet, daß der Druckschlauch einen rechteckförmigen Querschnitt hat.

3. Druckschlauch nach einem der Ansprüche 1 und 2, dadurch gekennzeichnet, daß die Flachseiten (4) durch zwei Stege (6) verbunden und abgestützt sind, die den Querschnitt des Druckschlauches in drei Kammern (7) annähernd gleichen Querschnitts aufteilen.

4. Schlauchtrommel für einen Druckschlauch nach einem der Ansprüche 1 bis 3, bestehend aus einer Rundtrommel (25) mit beidseitigen Begrenzungsscheiben (21, 26) und einer Wasserzuleitung (18) und einem Wasserabfluß (9), dadurch gekennzeichnet, daß der Abstand der beidseitigen Begrenzungsscheiben (21, 26) der Breite des Druckschlauches (30) entspricht.

5. Schlauchtrommel nach Anspruch 4, dadurch gekennzeichnet, daß eine der Begrenzungsscheiben (21, 26) als feststehende Rückscheibe (21) ausgebildet ist und Rundtrommel (25) und die fest damit verbundene Frontscheibe (26) gegenüber der Rückscheibe (21) drehbar gelagert sind.

6. Schlauchtrommel nach einem der Ansprüche 4 und 5, dadurch gekennzeichnet, daß die feste Rückscheibe (21) einen zylindrischen Hohlzapfen (28) aufweist, der in eine entsprechende Ausbohrung (29) der Rundtrommel (25) eingreift.

7. Schlauchtrommel nach der Ansprüche 4 bis 6, dadurch gekennzeichnet, daß der Wasseranschlußnippel (8) und der Wasserabflußnippel (33) integraler Bestandteil der Abdeckplatte (34) sind, die im Bereich der Rundtrommel (25) die Frontscheibe abdeckt.

8. Schlauchtrommel nach einem der Ansprüche 4 bis 7, dadurch gekennzeichnet, daß ein im Hohlzapfen (28) befindliches Rotationsverbindungsstück (36) drehbar auf dem Wasseranschlußnippel (8) gelagert ist und die Verbindung des Wasserzuleitungsschlauches zum Wasseranschlußnippel (8) herstellt.

9. Kupplungsstück für Druckschläuche nach einem der Ansprüche 1 bis 3 dadurch gekennzeichnet, daß das Kupplungsstück (41) besteht aus einer Schlauchtülle, die eine der Anzahl der Kammern (7) des Druckschlauches (30) entsprechende Anzahl an Hohlsteckern (43) mit annähernd dem Querschnitt der Kammern (7) entsprechenden Außenumfang aufweist,
einer über den Druckschlauch (30) aufschiebbaren Schlauchmuffe (44) und
einem Geräteverbindungsteil (45)

10. Kupplungsstück nach Anspruch 9, dadurch gekennzeichnet, daß die Hohlstecker (43) sich zum offenen Ende (46) hin konisch verjüngen.

11. Kupplungsstück nach einem der Ansprüche 9 und 10, dadurch gekennzeichnet, daß die Schlauchmuffe (44) sich in ihrem Querschnitt zum Geräteverbindungsteil (45) hin leicht verjüngt.

12. Kupplungsstück nach einem der Ansprüche 9 bis 11, dadurch gekennzeichnet, daß das Geräteverbindungsteil (45) einen rechteckigen Zwischenklotz (47) und ein Rundteil (48) mit Innengewinde (49) bzw. eine Steckverbindung aufweist.

13. Kupplungsstück nach Anspruch 12, dadurch gekennzeichnet, daß das Rundteil (48) gegenüber dem Zwischenklotz (47) drehbar gelagert ist.

Fig. 1

Fig.2

Fig.3

Fig.4

Fig. 5

Fig. 6

Fig. 7

Fig. 8

Fig. 9

Fig. 10